Europäisches Patentamt

(19) European Patent Office

Office européen des brevets

(11) Numéro de publication: **0 195 792**
**B1**

(12) **FASCICULE DE BREVET EUROPEEN**

(45) Date de publication du fascicule du brevet:
**17.11.88**

(51) Int. Cl.⁴: **G 01 N 27/90**

(21) Numéro de dépôt: **85904636.9**

(22) Date de dépôt: **17.09.85**

(86) Numéro de dépôt international:
**PCT/FR 85/00248**

(87) Numéro de publication internationale:
**WO 86/01895 (27.03.86** Gazette 86/7)

(54) **PROCEDE ET DISPOSITIF DE DETECTION, PAR COURANTS DE FOUCAULT, DE DEFAUTS TYPIQUES SUR UN PRODUIT.**

(30) Priorité: **20.09.84 FR 8414434**

(43) Date de publication de la demande:
**01.10.86 Bulletin 86/40**

(45) Mention de la délivrance du brevet:
**17.11.88 Bulletin 88/46**

(84) Etats contractants désignés:
**AT BE CH DE GB IT LI LU NL SE**

(56) Documents cités:
**DE - A - 2 937 865**
**FR - A - 2 124 952**
**GB - A - 2 086 057**
**GB - A - 2 095 843**

**Patents Abstracts of Japan, volume 6, no. 18, (P-100)**
**(896) 2 février 1982**

(73) Titulaire: **INSTITUT DE RECHERCHES DE LA SIDERURGIE FRANCAISE (IRSID) France, 185, rue Président Roosevelt, F-78105 Saint-Germain-en-Laye (FR)**

(72) Inventeur: **MULLER, Jean, Louis, 31, rue de Verdun, F-78110 Le Vésinet (FR)**

(74) Mandataire: **Ventavoil, Roger et al, IRSID Service de la Propriété Industrielle Voie Romaine, F-57210 Maizierres-lès-Metz (FR)**

## Description

La présente invention concerne la détection, par courants de Foucault, de défauts typiques sur un produit en défilement, relatif avec un détecteur, et plus particulièrement la détection de criques sur une brame ou produit similaire.

Une brame telle que produite dans une installation de coulée continue peut présenter à sa surface, le long de ses bords, des défauts en forme de criques qu'il est important de localiser avant le traitement ultérieur du produit.

Pour la détection de défauts de surface sur un produit métallique en défilement relatif avec un détecteur, il est connu d'utiliser un procédé de détection à courants de Foucault, procédé du type selon lequel un champ magnétique alternatif est engendré pour provoquer la circulation de courants de Foucault à la surface du produit, un signal représentatif des variations des courants de Foucault est recueilli au moyen d'un capteur différentiel placé au voisinage de la surface du produit, et le signal recueilli est démodulé par projection suivant un angle de phase réglable pour détecter les perturbations introduites par les défauts à détecter. De plus, il est connu (DE-A-2937865) de filtrer, au moyen d'un filtre numérique, un signal numérique dû à des irrégularités d'un produit en défilement relatif avec un détecteur qui utilise des courants de Foucault.

La détection de criques sur une brame au moyen d'un procédé de ce type est particulièrement difficile. En effet, en plus de conditions opératoires défavorables (en particulier la température), il existe de nombreuses sources de bruit, notamment la présence d'irrégularités de surface (vagues ou rides), les effets de bord, les variations aléatoires de distance entre capteur et produit, etc.

Malgré ces conditions défavorables, qui se traduisent par un faible rapport signal/bruit, la présente invention a pour but de fournir un procédé de détection automatique et fiable, particulièrement apte à la reconnaissance de défauts typiques tels que des criques sur une brame en défilement relatif avec un détecteur.

Ce but est atteint grâce à un procédé du typ comportant les caractéristiques techniques énoncées dans le préambule de la revendication 1 selon lequel, conformément à l'invention, pendant toute la durée de détection, on détermine automatiquement et périodiquement l'angle de phase pour lequel la projection du signal recueilli a une valeur moyenne minimale et l'on effectue la projection du signal recueilli suivant ledit angle de phase, afin d'éliminer des perturbations du signal recueilli dues à des irrégularités de surface répétitives; la composante du signal recueilli obtenue par ladite projection est convertie sous forme numérique; le signal numérique ainsi obtenu est filtré au moyen d'un filtre numérique dont les caractéristiques sont prédéterminées en fonction d'un type de défaut à détecter; et un signal de détection de défaut est émis lorsque le signal de sortie du filtre numérique dépasse un seuil prédéterminé.

La fiabilité de la détection réalisée par ce procédé est la conséquence d'une amélioration considérable du rapport signal/bruit grâce à la combinaison des éléments suivants:

– utilisation d'un capteur différentiel avec lequel les signaux parasites en mode commun sont éliminés,

– asservissement de l'angle de phase de projection du signal recueilli pour éliminer l'influence d'irrégularités de surface répétitives, telles que vagues ou rides, qui ne constituent pas des défauts proprement dits et qui sont caractérisés par un angle de phase particulier pouvant évoluer pendant le processus de détection, et

– filtrage numérique sélectif grâce à un filtre adapté aux caractéristiques prédéterminées en fonction d'un type de défaut à détecter et du capteur différentiel déjà mentionné.

De préférence, la composante du signal recueilli obtenue par projection suivant l'angle de phase déterminé est convertie sous forme numérique avec une fréquence d'échantillonnage asservie à la vitesse de défilement du produit.

Le signal numérique obtenu est ainsi indépendant d'éventuelles variations de la vitesse de défilement du produit, ce qui simplifie la réalisation du filtre numérique. Le filtrage numérique est par exemple réalisé par corrélation avec un signal numérique représentant la signature pré-enregistrée d'un type particulier de défaut à détecter.

L'invention a aussi pour but de fournir un dispositif de détection permettant la mise en œuvre du procédé défini ci-avant.

Ce but est atteint grâce à un dispositif comportant: des moyens pour engendrer un champ magnétique alternatif afin de provoquer la circulation de courants de Foucault à la surface du produit; un capteur différentiel destiné à recueillir un signal représentatif des variations des courants de Foucault; et des moyens de démodulation du signal recueilli par projection suivant un angle de phase réglable pour détecter les perturbations introduites par les défauts à détecter, dispositif comportant en outre:

– des moyens de calcul pour déterminer automatiquement et périodiquement l'angle de phase pour lequel la projection du signal recueilli a une valeur moyenne minimale;

– une liaison de commande entre les moyens de calcul et les moyens de démodulation pour asservir l'angle de phase suivant lequel la projection du signal recueilli est effectuée audit angle de phase déterminé;

– un convertisseur analogique-numérique relié aux moyens de démodulation pour convertir sous forme numérique la composante du signal recueilli obtenue par ladite projection; et

– un filtre numérique relié au convertisseur pour filtrer le signal numérique fourni par ce dernier, le filtre numérique ayant des caractéristiques prédéterminées en fonction d'un type de défaut à détecter.

D'autres particularités et avantages du procédé et du dispositif selon l'invention ressortiront à la lecture de la description faite ci-après, à titre indicatif mais non limitatif, en référence aux dessins annexés sur lesquels:

- la figure 1 illustre très schématiquement une disposition des bobines d'émission et de réception d'un dispositif de détection selon l'invention inspectant une brame d'acier à la sortie d'une machine de coulée continue.

- la figure 2 est un schéma par blocs du dispositif de détection de la figure 1;

- la figure 3 est un diagramme illustrant les variations du signal délivré par le capteur, après démodulation en phase et en quadrature;

- la figure 4 est un exemple des variations de la composante du signal recueilli obtenue par projection suivant l'angle de phase déterminé par les moyens de calcul du dispositif de la figure 2; et

- la figure 5 illustre la signature pré-enregistrée d'un défaut sous forme de crique.

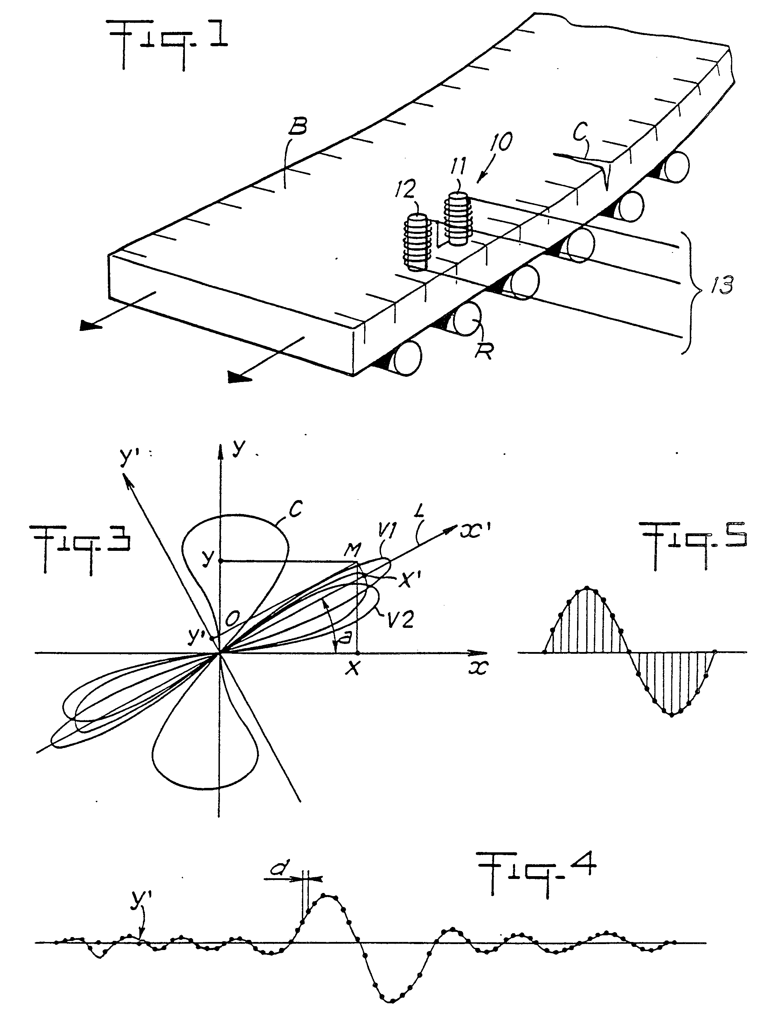

La figure 1 montre une partie d'une brame B guidée sur des rouleaux de soutien R en sortie d'une installation de coulée continue. Seuls les rouleaux inférieurs ont été représentés pour ne pas surcharger inutilement la figure.

Le dispositif de détection de criques 10 comprend un capteur différentiel comprenant deux bobinages 11, 12 à l'intérieur desquels sont logés des noyaux de ferrite. Le capteur est situé au-dessus de la brame B, au voisinage de la surface supérieure et d'un bord de celle-ci, et en regard d'une zone de surface de la brame B ayant subi un décalaminage en vue de mettre à nu des criques éventuelles.

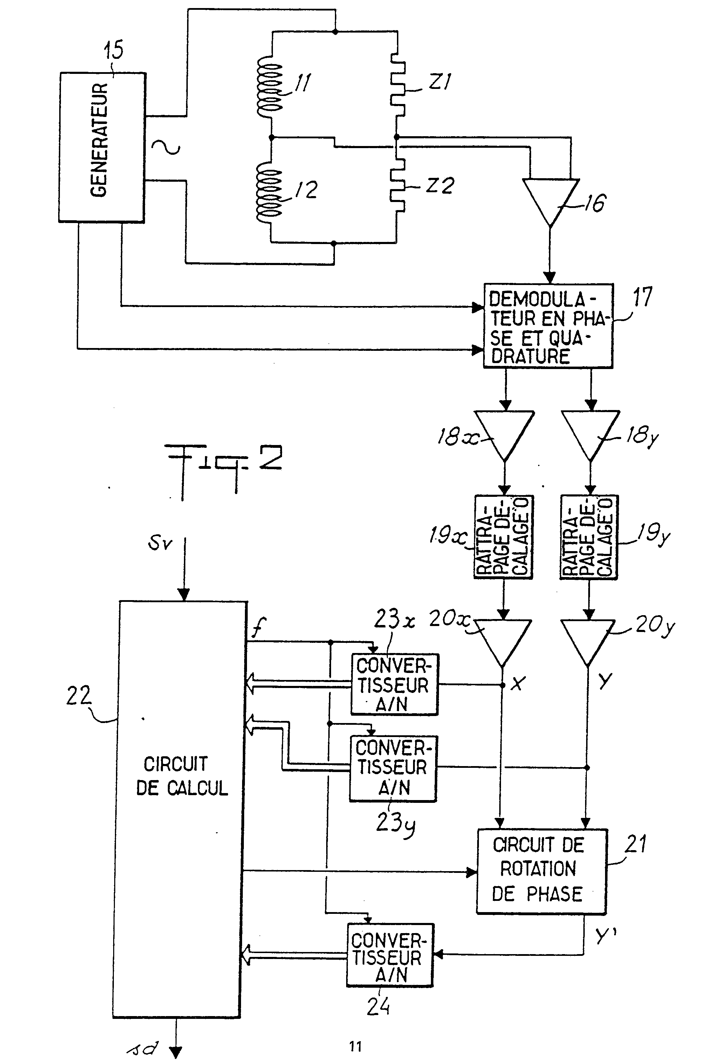

Les bobinages 11, 12 sont disposés l'un derrière l'autre dans la direction D de défilement de la brame B et ont leurs axes perpendiculaires à la surface supérieure de la brame. Dans l'exemple illustré, chaque bobinage 11, 12 forme à la fois émetteur et récepteur pour, d'une part, engendrer localement un champ magnétique et, d'autre part, recueillir un signal représentatif des perturbations produites par la partie de brame située dans la zone d'action du capteur (en variante, les fonctions émettrice et réceptrice peuvent être séparées en utilisant une spire émettrice créant un champ à l'intérieur duquel se trouvent deux enroulements récepteurs formant deux branches adjacentes d'un pont). Des liaisons 13 relient les bobinages 11, 12 à des circuits d'alimentation et de traitement décrits ci-après en référence à la figure 2.

Un second dispositif semblable de détection (non représenté) est disposé au voisinage de l'autre bord de la grande face supérieure de la brame B. De même, deux autres dispositifs analogues peuvent être disposés au regard des bords de la grande face inférieure. Comme le montre la figure 2, les bobinages 11, 12 sont les éléments constitutifs de deux branches adjacentes d'un pont dont les deux autres branches sont constituées par des impédances fixes Z1, Z2. Les deux sommets du pont entre lesquels les bobinages 11, 12 sont branchés en série, sont reliés aux bornes de sortie d'un générateur 15 délivrant un signal sinusoïdal à une fréquence fixe par exemple comprise entre 5 et 50 kHz. Le signal de mesure différentiel est prélevé entre les deux autres sommets du pont et est appliqué à un amplificateur 16.

Le pont est normalement équilibré pour produire un signal de mesure nul lorsque les bobinages 11 et 12 sont parcourus par un même courant. Les criques telles que C (figure 1) que la brame B peut présenter prennent naissance sur un bord de la brame et s'étendent transversalement sur une partie de la largeur de la brame. La disposition des bobinages 11, 12 fait que la crique va se présenter successivement et séparément dans le champ d'action du bobinage 11 puis dans celui de bobinage 12, donnant ainsi naissance à un signal de mesure présentant une première arche dans un sens et une deuxième arche dans l'autre sens (voir figure 3).

Le signal de sortie de l'amplificateur 16 est démodulé en phase et en quadrature au moyen d'un circuit de démodulation 17 recevant ce signal différentiel ainsi que, d'une part, le signal de sortie du générateur 15 et, d'autre part, ce même signal de sortie déphasé de 90°. Les signaux démodulés en sortie du circuit 17 sont traités dans deux voies parallèles comprenant, chacune, un premier étage d'amplification 18x, 18y, un circuit 19x, 19y de rattrapage de décalage de zéro et un second étage d'amplification 20x, 20y à gain réglable. Les signaux X et Y en sortie des étages 20x et 20y sont appliqués aux entrées d'un circuit 21 de rotation de phase capable de délivrer des signaux:

$X' = X \cos a + Y \sin a$, et

$Y' = -X \sin a + Y \cos a$,

représentatifs des projections du signal différentiel sur des axes orthogonaux d'un système de référence déphasé d'un angle a par rapport au signal de sortie du générateur 15.

On notera que les circuits 17 à 21 décrits ci-dessus forment en ensemble connu en soi et utilisé dans des appareils de détection par courants de Foucault tels que, par exemple, l'appareil commercialisé par la Société HBS sous la référence «EC 3000» ou par la Société PLS sous la référence «Metalog».

Sur la figure 3, sont représentées les courbes décrites par un point M dont les coordonnées X et Y par rapport à deux axes orthogonaux Ox, Oy sont les amplitudes des signaux de sortie des étages 20x, 20y, c'est-à-dire sont représentatives des composantes «active» «réactive» du signal de mesure après démodulation en phase et en quadrature.

Au cours du défilement de la brame B, on observe que le point M décrit successivement plusieurs courbes semblables V1, V2,... constituées chacune de deux lobes allongés sensiblement symétriques par rapport au point origine O. Ces courbes sont représentatives d'irrégularités de même nature constituées par des vagues au rides à la surface de la brame. La symétrie par rapport à l'origine O est due à l'utilisation d'un capteur différentiel, deux points symétriques sur une des courbes V1, V2, ... correspondant aux passages d'une même zone de la brame successivement devant les deux bobinages 11 et 12. On note que les vagues ou rides en surface de la brame se traduisent par les lobes d'amplitude variable et d'orientation générale Ox' situé dans un secteur relativement limité.

Sur la figure 3 est également représentée une courbe C décrite par le point M au cours du passage d'une crique dans la zone d'action du capteur. La courbe C est formée de deux arches qui sont sensiblement symétriques par rapport à l'origine O, mais qui ont une forme et, surtout, une orientation générale différentes de celles des lobes des courbes V1, V2, ...

Selon une caractéristique de l'invention, la rotation de phase est effectuée d'une valeur d'angle a qui est déterminée en permanence pour correspondre à l'inclinaison par rapport à l'axe Ox de la direction générale Ox' des lobes des courbes V1, V2, ...

A cet effet, les signaux X et Y sont appliqués à un circuit de calcul 22 après avoir été convertis sous forme numérique au moyen de convertisseurs 23x, 23y. A partir d'un ensemble de valeurs numérisées et mémorisées, le circuit 22 détermine l'inclinaison a de la droite L de direction Ox' telle que la somme des distances entre les points M et la droite L soit minimale, c'est-à-dire l'angle a pour lequel la valeur moyenne des projections Y' est minimale. Le circuit 22 est un circuit à microprocesseur. Les valeurs de X et Y sont échantillonnées par les convertisseurs 23x, 23y à une fréquence d'échantillonnage f asservie à la vitesse v de défilement de la brame B et élaborée par le circuit 22. A cet effet, le circuit 22 reçoit un signal numérique sv représentatif de la vitesse de défilement de la brame et fourni par exemple par un capteur associé à l'un des rouleaux R. Le calcul de a est effectué par régression linéaire sur une population de valeurs X, Y correspondant à une longueur donnée de brame, par exemple 200 mm. La valeur de l'angle de phase a est ainsi remise à jour tous les 200 mm de brame.

Des essais effectués ont montré que l'angle a varie relativement peu dans le temps, la direction Ox' restant dans un secteur d'environ 10°. Les variations de l'angle a sont essentiellement dues à des changements de température. Au départ de la détection, pour les 200 premiers mm de brame surveillés l'angle a est fixé arbitrairement à une valeur initiale ao.

L'angle a étant déterminé ou, ce qui revient au même, l'angle a + 90°, l'on s'intéresse alors uniquement à la composante Y' du signal recueilli obtenue par projection suivant l'angle de phase a + 90°, c'est-à-dire la composante dont la valeur moyenne sur les 200 derniers mm surveillés est minimale. C'est cette composante qui fait apparaître le meilleur rapport signal/bruit.

Bien que les variations de l'angle a au cours du temps soient relativement limitées, la remise à jour périodique de la valeur de cet angle s'avère toutefois préférable pour la fiabilité de la détection. Un simple écart de quelques degrés peut en effet introduire un niveau de bruit élevé dans la composante Y' comptenu de l'amplitude des lobes des courbes V1, V2, ...

La composante Y' retenue est convertie sous forme numérique par un convertisseur analogique-numérique 24. La conversion est effectuée à la fréquence f tirée du circuit de calcul 22 et asservie à la vitesse de défilement de la brame.

La figure 4 illustre l'allure que peut prendre la courbe représentant les variations dans le temps de la composante Y'. Les points sur cette courbe représentent les échantillons prélevés par le convertisseur 24. La vitesse de défilement de la brame pouvant varier par exemple entre 0 et 4 cm/s, la fréquece f est commandée pour que l'intervalle entre deux échantillons successifs corresponde à une longueur prédéterminée d de la brame, par exemple 2 mm.

Après conversion sous forme numérique, le signal V' est filtré au moyen d'un filtre numérique adapté. Dans l'exemple illustré, le filtrage numérique est réalisé par corrélation avec un signal numérisé de référence correspondant au défaut à détecter. La figure 5 illustre les valeurs numériques du signal de référence (ou signature) correspondant à une crique, l'intervalle entre deux valeurs numériques successives correspondant à la distance d entre deux échantillons du signal Y' numérisé.

La fonction de corrélation utilisée est par exemple de la forme:

$$Z = \left[ z_j = \sum_{i=1}^{n} (a_i \cdot y'_{j-i}), \right]$$

n étant le nombre de points du signal de référence, $a_i$ le cœfficient associé au $i^{\text{ème}}$ point du signal de référence et $y'_{j-i}$ la valeur numérique du $(j-i)^{\text{ème}}$ échantillon d'une population de n points du signal y' numérisé. A titre d'exemple, la valeur de n peut être choisie égale à 20.

La corrélation est effectuée par le circuit à microprocesseur 22 dans lequel les cœfficients $a_i$ ont été pré-enregistrés à partir de mesures effectuées au moyen du dispositif de détection utilisé.

Une nouvelle valeur de la fonction de corrélation Z est calculée à chaque nouvel échantillon $y'_j$ de la composante Y' numérisée, et est comparée par le circuit à microprocesseur 22 à une valeur de seuil prédéterminée ZO. Lorsque cette valeur de seuil est dépassée, le circuit 22 commande l'émission d'un signal sd indiquant la détection d'une crique sur la brame.

On notera que la signature d'un défaut de crique se présente sous une forme quasi-sinusoidale. Aussi, le filtrage du signal Y' numérisé peut être réalisé au moyen d'un filtre numérique passebande dont les fréquences de coupure sont déterminées en fonction des caractéristiques du dispositif de détection, par exemple par mesure de la fréquence apparente de la signature du défaut à détecter.

Dans ce qui précède, l'on a envisagé l'utilisation d'un capteur en pont avec deux bobinages à l'intérieur desquels sont disposés des noyaux de ferrite.

En variante, un montage autre qu'en pont peut être utilisé dans la mesure où il permet une mesure différentielle (par exemple, un montage avec émission et réception séparées, deux bobinages récepteurs étant associés à un bobinage émetteur commun et étant branchés de façon différentielle).

Toujours en variante, il est possible, au prix d'une diminution de l'induction magnétique, de se passer des noyaux de ferrite dans les bobines du capteur.

Bien entendu, l'invention est applicable aussi bien à une brame sortant d'une installation de coulée continue et défilant au voisinage d'un détecteur en position fixe, qu'à une brame immobilisée, par exemple sur un parc, et parcourue par un détecteur monté sur un équipage mobile.

De même, l'invention est applicable au contrôle non destructif de tout produit métallique, en acier ou autre matière en défilement relatif avec un détecteur.

**Revendications**

1. Procédé de détection, par courants de Foucault, de défauts typiques sur un produit en défilement relatif avec un détecteur, notamment pour la détection de criques sur une brame ou un produit similaire, procédé selon lequel un champ magnétique alternatif est engendré pour provoquer la circulation de courants de Foucault à la surface du produit, un signal représentatif des variations des courants de Foucault est recueilli au moyen d'un capteur différentiel placé au voisinage de la surface du produit, et le signal recueilli est démodulé par projection suivant un angle de phase réglable pour détecter les perturbations introduites par les défauts à détecter, caractérisé en ce que, pendant toute la durée de détection, l'on détermine automatiquement et périodiquement l'angle de phase pour lequel le projection du signal recueilli a une valeur moyenne minimale et l'on effectue la projection du signal recueilli suivant ledit angle de phase, afin d'éliminer des perturbations du signal recueilli dues à des irrégularités de surface répétitives; la composante du signal recueilli obtenue par ladite projection est convertie sous forme numérique; le signal numérique ainsi obtenu est filtré au moyen d'un filtre numérique dont les caractéristiques sont prédéterminées en fonction d'un type de défaut à détecter; et un signal de détection de défaut est émis lorsque le signal de sortie du filtre numérique dépasse un seuil prédéterminé.

2. Procédé selon la revendication 1, caractérisé en ce que la composante du signal recueilli obtenue par projection suivant l'angle de phase déterminé est convertie sous forme numérique avec une fréquence d'échantillonnage asservie à la vitesse de défilement du produit relativement au détecteur.

3. Procédé selon l'une quelconque des revendications 1 et 2, caractérisé en ce que le filtrage numérique est réalisé par corrélation avec un signal numérique représentant la signature pré-enregistrée d'un type particulier de défaut à détecter.

4. Dispositif de détection, par courants de Foucault, de défauts typiques sur un produit (B) en défilement relatif avec un détecteur, notamment pour la détection de criques sur une brame ou un produit similaire, dispositif comportant des moyens (11, 12, 15) pour engendrer un champ magnétique alternatif afin de provoquer la circulation de courants de Foucault à la surface du produit (B); un capteur différentiel (11, 12, Z1, Z2) destiné à recueillir un signal représentatif des variations des courants de Foucault; et des moyens de démodulation (17–21) du signal recueilli par projection suivant un angle de phase réglable pour détecter les perturbations introduites par les défauts à détecter, dispositif caractérisé en ce qu'il comporte en outre:
– des moyens de calcul (22) pour déterminer automatiquement et périodiquement l'angle de phase pour lequel la projection du signal recueilli a une valeur moyenne minimale;
– une liaison de commande entre les moyens de calcul (22) et les moyens de démodulation (21) pour asservir l'angle de phase (a) suivant lequel la projection du signal recueilli est effectuée audit angle de phase déterminé;
– un convertisseur analogique-numérique (24) relié aux moyens de démodulation (21) pour convertir sous forme numérique la composante (Y') du signal recueilli obtenue par ladite projection; et
– un filtre numérique (22) relié au convertisseur analogique-numérique (24) pour filtrer le signal numérique fourni par ce dernier, le filtre numérique ayant des caractéristiques prédéterminées en fonction d'un type de défaut à détecter.

5. Dispositif selon la revendication 4, caractérisé en ce que la fréquence d'échantillonnage dudit convertisseur analogique-numérique (24) est asservie à la vitesse de défilement du produit (B) relativement au détecteur.

6. Dispositif selon l'une quelconque des revendications 4 et 5, caractérisé en ce que le filtre numérique comprend des moyens de stockage de valeurs numériques représentatives d'une signature typique d'un défaut à détecter et des moyens de calcul pour effectuer le filtrage par corrélation entre le signal numérique fourni par ledit convertisseur et les valeurs numériques représentatives de ladite signature.

**Patentansprüche**

1. Verfahren zur Feststellung von typischen Fehlern auf einem relativ an einem Detektor vorbeilaufenden Produkt mittels Wirbelströmen, insbesondere zur Feststellung von Rissen auf einer Bramme oder einem ähnlichen Produkt, wobei ein magnetisches Wechselfeld erzeugt wird, um die Zirkulation von Wirbelströmen auf der Oberfläche des Produktes zu bewirken und wobei ein Signal von einem Differentialfühler aufgenommen wird, das die Veränderung der Wirbelströme darstellt, der in der Nähe der Oberfläche des Produkts angeordnet ist und wobei das aufgenommene Signal demoduliert wird mittels Projektion gemäss einem einstellbaren Phasenwinkel zur Feststellung von Störungen durch die festzustellenden Fehler, dadurch gekennzeichnet, dass während der gesamten Messdauer automatisch und periodisch der Phasenwinkel bestimmt wird, für den die Projektion des aufgenommenen Signals einen minimalen Mittelwert aufweist, und dass die Projektion des aufgenommenen Signals gemäss dem Phasenwinkel erfolgt, um Störungen zu eliminieren des aufgenommenen Signals aufgrund von wiederholten Unregelmässigkeiten der Oberfläche; die mittels dieser Projektion erhaltene Komponente des aufgenommenen Signals wird in numerische Form umgewandelt; das derart erhaltene numerische Signal wird mittels eines numerischen Filters gefiltert, dessen Eigenschaften vorgegeben sind als Funktion eines festzustellenden Fehlertyps; ein Fehlermessignal wird abgegeben, wenn das Ausgangssignal des numerischen Filters einen vorgegebenen Schwellwert überschreitet.

2. Verfahren nach Anspruch 1, dadurch gekennzeichnet, dass die durch Projektion gemäss dem vorgegebenen Phasenwinkel erhaltene Komponente des aufgenommenen Signals in numerische Form umgewandelt wird mittels einer Probenfrequenz, die auf die Vorbeilaufgeschwindigkeit des Produktes relativ zum Detektor abgestimmt ist.

3. Verfahren nach einem der Ansprüche 1 und 2, dadurch gekennzeichnet, dass die numerische Filterung mittels Korrelation mit einem numerischen Signal erfolgt, das die vorher eingespeicherte Signatur eines festzustellenden besonderen Fehlertyps darstellt.

4. Vorrichtung zur Feststellung von typischen Fehlern auf einem Gegenstand (B), der eine Relativbewegung zu einem Detektor durchführt, mittels Wirbelströmen, insbesondere zur Feststellung von Rissen auf einer Bramme oder einem ähnlichen Produkt, mit einer Anordnung (11, 12, 15), um ein magnetisches Wechselfeld zu erzeugen und so die Zirkulation von Wirbelströmen auf der Oberfläche des Produkts (B) zu bewirken; einen Differentialfühler (11, 12, Z1, Z2) zur Aufnahme eines Signals, das die Veränderungen der Wirbelströme darstellt; und mit einer Demodulatoranordnung (17–21) für das aufgenommene Signal mittels Projektion gemäss einem einstellbaren Phasenwinkel, um Störungen festzustellen, die von den festzustellenden Fehlern stammen, dadurch gekennzeichnet, dass die Vorrichtung zusätzlich aufweist:

– eine Rechenanordnung (22), um automatisch und periodisch den Phasenwinkel zu bestimmen, für den die Projektion des aufgenommenen Signals einen minimalen Mittelwert aufweist;

– eine Steuerverbindung zwischen der Rechenanordnung (22) und der Demodulatoranordnung (21), um den Phasenwinkel (a), gemäss dem die Projektion des aufgenommenen Signals erfolgt, auf den vorgegebenen Phasenwinkel einzuregeln;

– einen analog-numerischen Wandler (24), der mit der Demodulatoranordnung (21) verbunden ist, um die durch die Projektion erhaltene Komponente (Y') des aufgenommenen Signals in numerische Form umzuwandeln und

– einen numerischen Filter (22), der mit dem analog-numerischen Wandler (24) verbunden ist, um das von letzterem abgegebene numerische Signal zu filtern, wobei der numerische Filter vorgegebene Eigenschaften als Funktion eines festzustellenden Fehlertyps aufweist.

5. Vorrichtung nach Anspruch 4, dadurch gekennzeichnet, dass die Probenfrequenz des analog-numerischen Wandlers (24) auf die Vorbeilaufgeschwindigkeit des Produkts (B) relativ zum Detektor eingeregelt ist.

6. Vorrichtung nach einem der Ansprüche 4 und 5, dadurch gekennzeichnet, dass der numerische Filter eine Speicheranordnung aufweist für die numerischen Werte, die einer typischen Signatur eines festzustellenden Fehlers entsprechen und eine Rechenanordnung, um die Filterung durchzuführen mittels Korrelation zwischen dem vom Wandler gelieferten numerischen Signal und den numerischen Werten, die die Signaturen darstellen.

**Claims**

1. A process for the detection, by Eddy currents, of typical defects on a product passing relative to a detector, particularly for the detection of cracks in a bloom or a similar product, according to which process an alternating magnetic field is generated to provoke the circulation of Eddy currents at the surface of the product, a signal representative of the variations of the Eddy currents is collected by means of a differential sensor placed in the vicinity of the surface of the product, and the collected signal is demodulated by projection following an adjustable phase angle to detect perturbations introduced by the defects to be detected, characterised in that, during the entire duration of detection, one determines automatically and periodically the phase angle for which the projection of the collected signal has a minimum mean value and one effects the projection of the collected signal following said phase angle, in order to eliminate the perturbations of the collected signal due to repetitive surface irregularities; the component of the collected signal obtained by said projection is converted to numerical form; the numerical signal thus obtained is filtered by means of a numerical filter whose characteristics are predetermined according to one type of defect to be detected; and a defect detection signal is emitted when the output signal of the numerical filter passes a predetermined threshold.

2. A process according to claim 1, characterised in that the component of the collected signal obtained by projection following the determined phase angle is converted to numerical form with a sampling frequency dependant on the speed of passage of the product relative to the detector.

3. A process according to any of claims 1 or 2, characterised in that the numerical filtering is carried out by correlation with a numerical signal representing the pre-recorded signature of a particular type of defect to be detected.

4. A device for the detection, by Eddy currents, of typical defects on a product (B) passing relative to a detector, particularly for the detection of cracks in a bloom or a similar product, the device comprising means (11, 12, 15) of generating an alternating magnetic field to provoke the circulation of Eddy currents at the surface of the product (B); a differential sensor (11, 12 Z1, Z2) destined to collect a signal representative of the variations of the Eddy currents; and means for the demodulation (17–21) of the collected signal by projection following an adjustable phase angle to detect the perturbations introduced by the defects to be detected, the device characterised in that it further comprises:

   — calculating means (22) to determine automatically and periodically the phase angle for which the projection of the collected signal has a minimum mean value;

   — a command link between the calculating means (22) and the demodulation means (21) to subjugate the phase angle (a) following which the projection of the collected signal is effected to the said determined phase angle;

   — an analogue-numerical converter (24) connected to the demodulation means (22) to convert to numerical form the component (Y') of the collected signal obtained by the said projection; and

   — a numerical filter (22) connected to the analogue-numerical converter (24) to filter the numerical signal furnished by the latter, the numerical filter having predetermined characteristics according to one type of defect to be detected.

5. A device according to claim 4, characterised in that the sampling frequency of the said analogue-numerical converter (24) is dependent on the speed of passage of the product (B) relative to the detector.

6. A device according to any one of claims 4 and 5, characterised in that the numerical filter comprises means of storing the numerical values representative of a typical signature of a defect to be detected and calculating means to effect filtering by correlation between the numerical signal furnished by the said converter and the numerical values representative of the said signature.

Fig.1

Fig.3

Fig.5

Fig.4

0195792

Fig. 2